# EUROPEAN PATENT APPLICATION

(11) **EP 2 627 057 A1**
(43) Date of publication of application: **14.08.2013**
(21) Application number: 11858277.4
(22) Date of filing: 29.08.2011
(51) Int. Cl.: H04L 29/08

(54) **TIME-OUT CONTROL METHOD, DEVICE AND SYSTEM**

(30) Priority: 12.02.2011 CN 201110036832
(71) Applicant: Huawei Technologies Co., Ltd., Shenzhen, Guangdong 518129 (CN)
(72) Inventor: HUANG, Zhi, Shenzhen Guangdong 518129 (CN)
(74) Representative: Pfenning, Meinig & Partner GbR
(86) International application number: PCT/CN2011/079045
(87) International publication number: WO 2012/106951

(57) **Abstract**

The present invention discloses a timeout control method of controlling timeout of a client, where the client includes at least one browser user. The method includes: sending, by the client, a client request to a server, where the client request includes a first timeout control identifier, the first timeout control identifier is used for starting a timeout control of the browser user, and the server is configured to maintain condition information required for determining whether the browser user times out and generate timeout status information according to the condition information; obtaining the timeout status information of the browser user from the side of the server; and locking the current operation interface of the browser user when determining, according to the timeout status information, that the browser user times out. According to the timeout control method provided in the embodiments of the present invention, the client proactively obtains the timeout status information of the browser user. This prevents the risk that the timeout control is overridden when the client determines by itself the timeout status of the browser user.

## Description

### FIELD OF THE INVENTION

The present invention relates to the field of communications technologies, and in particular, to a timeout control mechanism in a network system.

### BACKGROUND OF THE INVENTION

To ensure the security of user data, operators provide multiple security protection solutions.

For example, in the current Web system, timeout control may be categorized into two modes: client-based timeout control and server-based timeout control. In the client-based timeout control, one client generally includes at least one browser user. When the current operation interface of the browser user is locked by the client due to timeout, the browser user can access the locked operation interface by copying a uniform resource locator (URL) to establish a new browser user at the client without enter the authentication information again. However, this timeout control mechanism produces potential security risks. To solve the problem, the prior art provides the server-based timeout control mechanism. According to this timeout control mechanism, when the browser user times out, the server interrupts a session with the browser user. In this manner, the defect that the timeout control mechanism is overridden by copying the URL can be overcome. However, the server-based timeout control mechanism cannot identify which client request requires a timeout control and which client request does not require a timeout control. Consequently, timeout control is required for all client requests sent from the client, and the server cannot correctly determine whether the browser user times out but may cause the timeout control of the browser user not to work. In addition, the client cannot proactively lock the current operation interface of the browser user. Only when the browser user sends a client request again, an alarm window indicating timeout is displayed and the operation interface is locked. However, before the alarm window is displayed and the operation interface is locked, information in the operation interface is exposed and therefore the system has potential risks.

### SUMMARY OF THE INVENTION

Embodiments of the present invention provide a timeout control method, a client, a server, and a timeout control system.

A timeout control method of controlling timeout of a client is provided, the client including at least one browser user. The method includes:
sending, by the client, a client request to a server, where the client request includes a first timeout control identifier, the first timeout control identifier is used for starting a timeout control of the browser user, and the server is configured to maintain condition information required for determining whether the browser user times out and generate timeout status information according to the condition information;
obtaining the timeout status information of the browser user from the side of the server; and
locking the current operation interface of the browser user when determining, according to the timeout status information, that the browser user times out.

A timeout control method of controlling timeout of a client is provided, the client including at least one browser user. The method includes:
receiving a client request from the client, where the client request includes a first timeout control identifier, and the first timeout control identifier is used for starting a timeout control of the browser user; and
determining, according to the first timeout control identifier, that the timeout control is required for the browser user, maintaining condition information required for determining whether the browser user times out, and generating timeout status information according to the condition information; where the timeout status information indicates whether the browser user times out so that the client locks the current operation interface of the browser user when the timeout status information indicates that the browser user times out.

A client includes:
a client requesting module, configured to send a client request to a server, where the client request includes a first timeout control identifier, the first timeout control identifier is used to start a timeout control of a browser user, and the server is configured to maintain condition information required for determining whether the browser user times out and generate timeout status information according to the condition information;
a timeout status obtaining module, configured to obtain the timeout status information of the browser user from the side of the server; and
a client locking module, configured to determine whether to lock the operation interface of the client according to the obtained timeout status information of the browser user.

A server includes:
a service receiving module, configured to receive a client request from the client, where the client request includes a first timeout control identifier, and the first timeout control identifier is used for starting a timeout control of a browser user; and
a timeout status determining module, configured to: determine, according to the first timeout control identifier, that the timeout control is required for the browser user; maintain condition information required for determining whether the browser user times out; and generate timeout status information according to the condition information, where the timeout status information indicates whether the browser user times out so that the client locks the current operation interface of the browser user when the timeout status information indicates that the browser user times out.

A timeout processing system includes:
a client, configured to:
send a client request to a server, the client request including a first timeout control identifier, where the first timeout control identifier is used for starting a timeout control of the browser user, and the server is configured to maintain condition information required for determining whether the browser user times out and generate timeout status information according to the condition information;
obtain the timeout status information of the browser user from the side of the server; and
lock the current operation interface of the browser user when determining, according to the timeout status information, that the browser user times out; and
a server, configured to:
receive a client request from the client, the client request including a first timeout control identifier, where the first timeout control identifier is used for starting a timeout control of a browser user;
determine, according to the first timeout control identifier, that the timeout control is required for the browser user;
maintain condition information required for determining whether the browser user times out; and
generate timeout status information according to the condition information; where the timeout status information indicates whether the browser user times out so that the client locks the current operation interface of the browser user when the timeout status information indicates that the browser user times out.

According to the timeout control method, client, server, and the timeout control system provided in the embodiments of the present invention, the timeout control identifier is used to identify whether a timeout control is required for the request sent by the client so that the server can start the timeout control by using the timeout control identifier, which implements a more accurate timeout control. In this manner, security of the client is improved.

### BRIEF DESCRIPTION OF THE DRAWINGS

FIG. 1 is a flowchart of a timeout control method according to an embodiment of the present invention;

FIG. 2 is a flowchart of a timeout control method according to an embodiment of the present invention;

FIG. 3 is a flowchart of a timeout control method according to an embodiment of the present invention;

FIG. 4 is a flowchart of a timeout control method according to an embodiment of the present invention;

FIG. 5 is a flowchart of a timeout control method according to an embodiment of the present invention;

FIG. 6 is a flowchart of a timeout control method according to an embodiment of the present invention;

FIG. 7 is schematic diagram of a client according to an embodiment of the present invention;

FIG. 8 is schematic diagram of a client according to an embodiment of the present invention;

FIG. 9 is schematic diagram of a client according to an embodiment of the present invention;

FIG. 10 is a block diagram of a server according to an embodiment of the present invention;

FIG. 11 is a block diagram of a server according to an embodiment of the present invention;

FIG. 12 is a block diagram of a server according to an embodiment of the present invention; and

FIG. 13 is a block diagram of a server according to an embodiment of the present invention.

### DETAILED DESCRIPTION OF THE EMBODIMENTS

An embodiment of the present invention provides a timeout control method of controlling timeout of a client, where the client includes at least one browser user. The method includes:
sending, by the client, a client request to a server, where the client request includes a first timeout control identifier, the first timeout control identifier is used for starting a timeout control of the browser user, and the server is configured to maintain condition information required for determining whether the browser user times out and generate timeout status information according to the condition information;
obtaining the timeout status information of the browser user from the side of the server; and
locking a current operation interface of the browser user when determining, according to the timeout status information, that the browser user times out.

Further, the timeout control method according to an embodiment of the present invention further includes:
prompting the browser user to re-enter user login information;
responding to the entered user login information; sending a login request to the server according to the user login information, where the login request includes the first timeout control identifier indicating that timeout control is required for the login request; and allowing the browser user to log in to an application system after the login request is approved.

Further, the timeout control method according to an embodiment of the present invention further includes:
automatically triggering the client request and obtaining a response corresponding to the automatically triggered client request to refresh content in the operation interface, where the automatically triggered client request includes a second timeout control identifier and the second timeout control identifier indicates that no timeout control is required for the client request.

According to the timeout control method provided in the embodiments of the present invention, a timeout control identifier is used to identify whether a timeout control is required for the request sent by the client so that the server can start the timeout control by using the timeout control identifier, which implements a more accurate timeout control. In addition, the client proactively obtains the timeout status information of the browser user from the server and locks the current operation interface of the browser use. The following describes the embodiments of the present invention in detail with reference to the accompanying drawings.

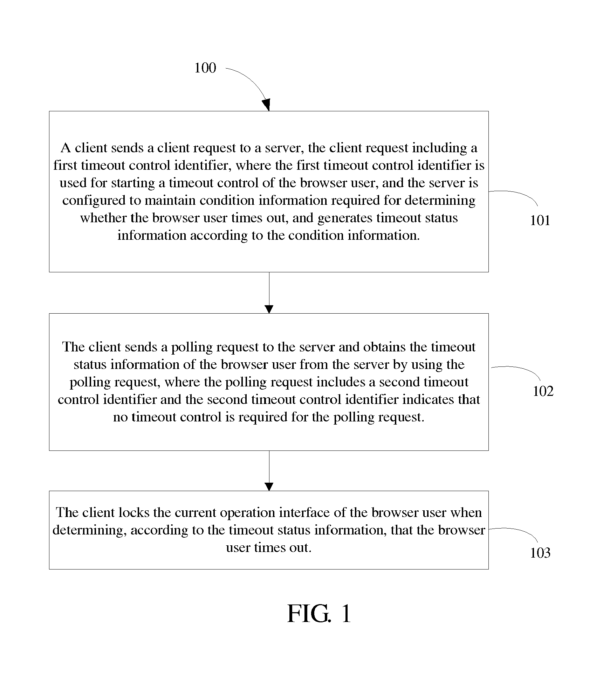

Referring to FIG. 1, a timeout control method 100 according to an embodiment of the present invention includes the following steps:

101. A client sends a client request to a server, where the client request includes a first timeout control identifier, the first timeout control identifier is used for starting a timeout control of the browser user, and the server is configured to maintain condition information required for determining whether the browser user times out and generate timeout status information according to the condition information.

In this step, the browser user sends the client request to the server by using the client. The client request may be a login request/initialization authentication request, or may be other service interaction requests. In this embodiment, the login request is used as an example to specifically describe this step. The user acquires the login interface of a client by using the URL (uniform resource locator). The login interface of the client may be stored locally, or may be stored in a server. After the user outputs the URL, a browser searches and checks whether the login interface of the client corresponding to the entered URL is stored locally. If the login interface of the client corresponding to the entered URL is stored locally, the browser directly obtains the login interface of the client; otherwise, the browser initiates a client login interface request by using the URL to the server. The server provides a corresponding login interface of the client according to the request, and displays the login interface to the browser user by using the browser for the user to output login information on the login interface of the client. The client sends a login request to the server according to the login information. When the client sends the login request according to the login information, the client adds a first timeout control identifier indicating whether the timeout control is required for the login request to the message header or message body of the login request, for example, timeout-control:0 indicating that timeout control is required for the login request. In addition, other requests sent by the client may further include a second timeout control identifier, for example, timeout-control:1 indicating that no timeout control is required for the other requests. The timeout control is required for the login request of the client to ensure the security of a client operation. Therefore, the login request sent by the client needs to include the timeout control identifier indicating that the timeout control is required for the login request. Specifically, corresponding to the above example, the login request includes timeout-control:0.

When receiving the login request of the client, the server verifies the login information in the login request. If the login information of the login request is verified successfully, that is, the login request is approved, the server allows the client to log in to an application system and displays a corresponding operation interface of the application system for the user to perform desired operations. When the user logs in to the application system by using the client, the client generates a corresponding Cookie ID. The Cookie ID records the login information of the user and the visit time after the login. Meanwhile, the server obtains the timeout control identifier in the login request, and starts the timeout control according to the timeout control identifier. In this embodiment, the server obtains the Cookie ID of the client and stores the visit time of the client by using Cookie ID as a key value, and correspondingly refreshes the last visit time corresponding to the Cookie ID each time the client sends a request that requires the timeout control. The Cookie ID and the last visit time are the condition information required for determining whether the browser user times out.

102. The client sends a polling request to the server and obtains the timeout status information of the browser user from the server by using the polling request, where the polling request includes a second timeout control identifier and the second timeout control identifier indicates that no timeout control is required for the polling request.

When the browser user logs in to the application system by using the client and after the server starts a corresponding timeout control mechanism, the client periodically obtains, in polling mode, timeout status information of the browser user by using the server, and determines whether to lock the operation interface of the client according to the timeout status information of the browser user fed back by the server. The polling request is automatically triggered/started by the client. Therefore, such type of request as the request automatically triggered/started by the client is not an action of the browser user. Therefore, such type of request as the request automatically triggered/started by the client cannot be used to determine the status of the browser user. In the embodiments of the present invention, the timeout control identifier indicating that no timeout control is required for the polling request is added in the polling request automatically triggered by the client to notify the server that no timeout control is required for the polling request. The server does not need to refresh the visit time corresponding to the Cookie ID. After receiving the polling request, the server obtains the Cookie ID of the client corresponding to the polling request and the last visit time of the browser user corresponding to the Cookie ID, and calculates the difference between the current time and the last visit time, and compares the difference with a preset threshold. If the difference is greater than the preset threshold, the server returns a timeout identifier; if the difference is smaller than the preset threshold, the server returns a non-timeout identifier. The preset threshold may be a duration set by the browser user, or may be a default duration in the application system.

103. Lock the current operation interface of the browser user when determining, according to the timeout status information, that the browser user times out.

When the client obtains, by using the polling request, the timeout status information indicating that the current browser user times out, the client proactively displays a locking frame. During the locking process, when learning that the browser user times out, the client proactively locks the current operation interface. The locking mode may be by displaying the locking frame to overlay the current operation interface, or by displaying a login interface for the browser user to overlay the current operation interface, or by directly locking the current operation interface. Meanwhile, by bubbles or flashes, the browser user is prompted to log in to the client again. When the client obtains, by using the polling request, an identifier indicating that the current browser user does not time out, step 102 is performed again and another polling request is initiated.

According to the timeout control method 100 provided in this embodiment, a timeout control identifier is used to identify whether a timeout control is required for the request sent by the client so that the server can start the timeout control by using the timeout control identifier, which implements a more accurate timeout control. In addition, the client proactively obtains the timeout status information of the browser user from the server and locks the current operation interface of the browser use.

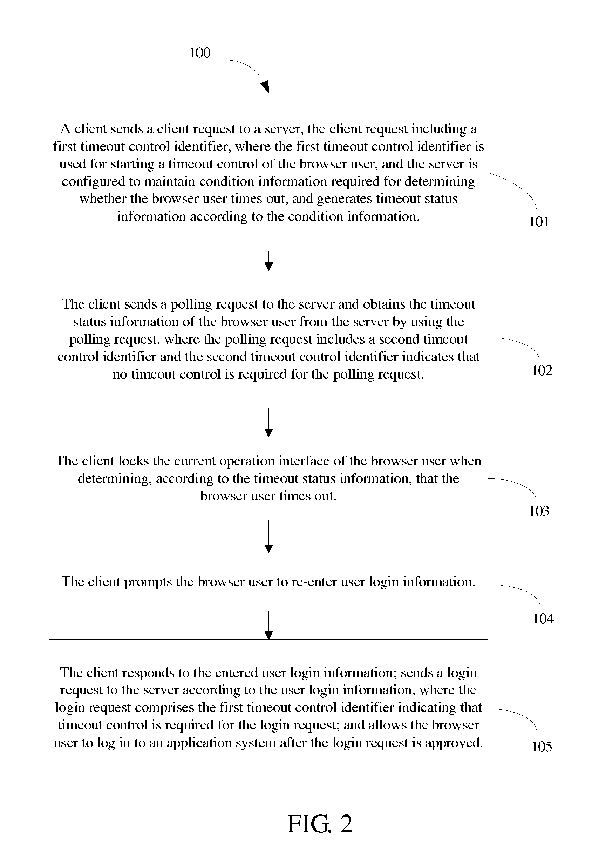

Referring to FIG. 2, if the operation interface is locked, it can be unlocked by performing the following steps:

104. Prompt the browser user to re-enter user login information.

105. Respond to the entered user login information; send a login request to the server according to the user login information, where the login request includes the first timeout control identifier indicating that timeout control is required for the login request; and allow the browser user to log in to an application system after the login request is approved.

When the current operation interface of the browser user is locked due to timeout, and the browser user needs to log in to the operation interface again, the browser user needs to re-enter login information. The client responds to the login information and sends a login request to the server according to the login information of the browser user. After the server verifies the login information and the verification succeeds, the server returns an authentication success message. The client unlocks the operation interface of the browser user according to the authentication message and accesses the operation interface, and meanwhile the server refreshes the last visit time corresponding to the Cookie ID of the client and performs another cycle of a timeout control. In this step, when the browser user logs in to the client again, the locked operation layer is unlocked and reused, the user does not need to log in to an initial operation interface, which will cause the loss of the operation interface before being locked. Therefore, after the operation interface is unlocked, the browser user can log in to the application system and returns to the operation interface before being locked. In this manner, the context of the operation interface is not lost, which facilitates subscriber operations.

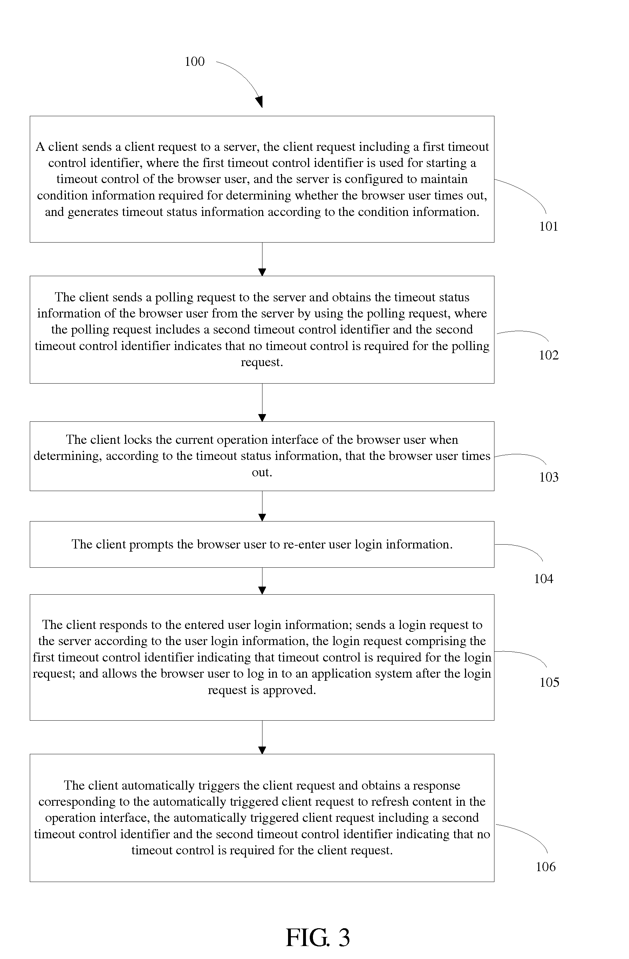

Further, referring to FIG. 3, a client-based timeout control method 100 according to an embodiment of the present invention further includes the following steps:

106. Automatically trigger the client request and obtain a response corresponding to the automatically triggered client request to refresh content in the operation interface, where the automatically triggered client request includes a second timeout control identifier and the second timeout control identifier indicates that no timeout control is required for the client request.

The automatically triggered client request is generally an automatic request for periodically obtaining alarm data or refreshing the monitoring status. If such request is not distinguished from a non-automatic client request, the server considers that the client is permanently in the active state. As a result, the timeout control mechanism does not work. Therefore, in this embodiment, the second timeout control identifier indicating that no timeout control is required for the automatically triggered client request is added to the automatically triggered client request. The server distinguishes the automatically triggered client request from the non-automatic client request by using the second timeout control identifier. Therefore, the last visit time corresponding to the Cookie ID does not need to be refreshed.

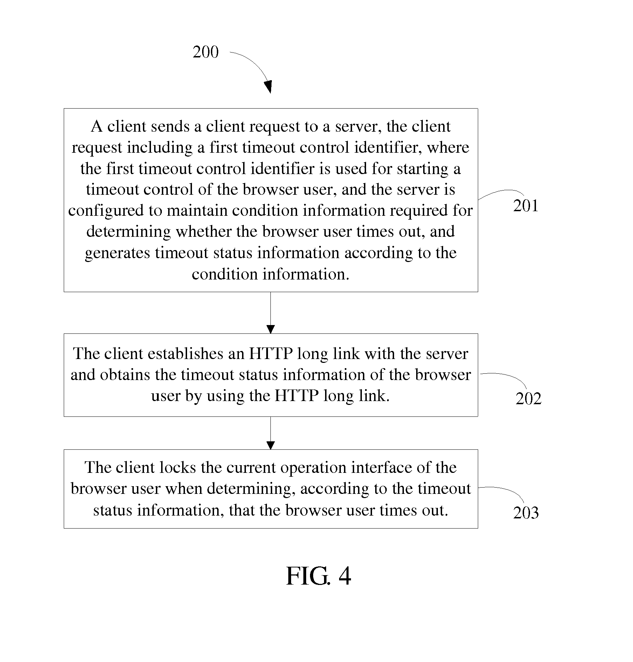

Referring to FIG. 4, a client-based timeout control method 200 according to an embodiment of the present invention is illustrated. The timeout control method according to this embodiment is similar to the timeout control method 100 provided in the above embodiment. Similar reference numbers represent the same or corresponding steps. For example, step 201 is the same as step 101, and step 202 corresponds to step 102. For a brief description, the same steps are not detailed here again. The timeout control method 200 differs from the timeout control method 100 in that a different method of obtaining the timeout status information of the browser user is used. To be specific, step 202 is different from step 102. Step 203 is detailed as follows:

202. The client establishes a Hypertext Transfer Protocol (HTTP) long link with the server and obtains the timeout status information of the browser user by using the HTTP long link.

In this step, the client does not need to periodically send a timeout status query request of the browser user, and an HTTP long link only needs to be established between the client and the server when the client sends the timeout status query request for the first time. After the HTTP long link is established, the server feeds back the timeout status information of the browser user by using the HTTP long link for the client to determine, according to the timeout status information of the browser user, whether to lock the operation interface of the client. The specific implementation mechanism can refer to the description in steps 104 and 105.

According to the timeout control method 200 provided in this embodiment, a timeout control identifier is used to identify whether a timeout control is required for the request sent by the client so that the server can start the timeout control by using the timeout control identifier, which implements a more accurate timeout control. In addition, the client proactively obtains the timeout status information of the browser user from the server and locks the current operation interface of the browser user. Further, in this embodiment, an HTTP long link is established between the client and the server to transmit the timeout status information of the browser user. Such an information transmission channel, that is, the HTTP long link for transmitting the status information of the browser user, needs to be established only when the status information of the browser user is queried for the first time. Subsequently, the status query request does not need to be sent and the status information of the browser user is sent by the server using the HTTP link to the client directly. In this manner, the system response speed is improved.

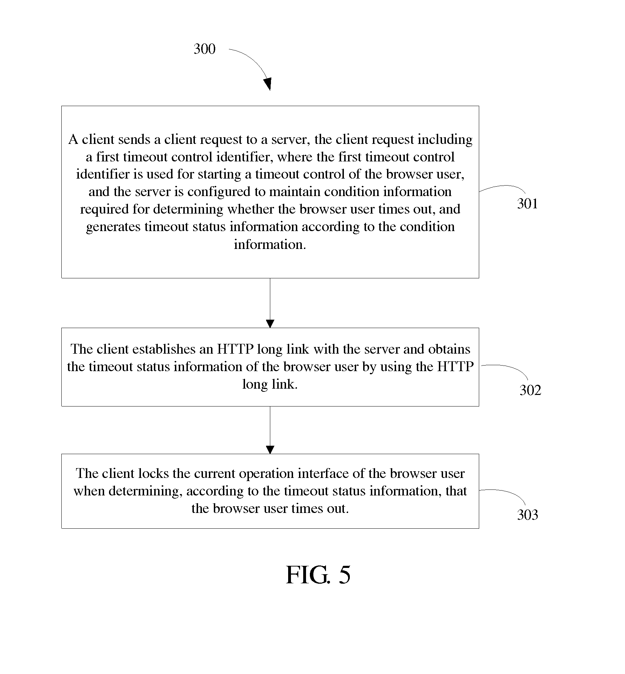

Referring to FIG. 5, a client-based timeout control method 300 according to an embodiment of the present invention is illustrated. The timeout control method according to this embodiment is similar to the timeout control method 100 provided in the above embodiment. Similar reference numbers represent the same or corresponding steps. For example, step 301 is the same as step 101, and step 302 corresponds to step 302. For a brief description, same steps are not detailed here again. The timeout control method 300 differs from the timeout control method 300 in that a different method of obtaining the timeout status information of the browser user is used. To be specific, step 302 is different from step 302. Step 302 is detailed as follows:

302. The client creates a Flex rich client object, listens to, by using the Flex rich client object, the server and proactively obtains the timeout status information of the browser user.

In this step, a Flex rich client object is embedded in the client. The Flex rich client is embedded in the Flash Player on the client, and listens on the server by using the Socket protocol, specifically, listens to, in real time, the determination of the server on whether the browser user times out. In this step, each time when the server receives a non-automatic client request from a browser user, the server refreshes the Cookie ID of the client sending the non-automatic client request, and starts the timeout control according to the timeout identifier in the non-automatic client request. To be specific, the server calculates the difference between the last visit time corresponding to the refreshed Cookie ID and the current time, and compares the difference with a preset threshold. If the difference is greater than the preset threshold, the browser user times out. In this case, after obtaining the timeout status information of the browser user, the Flex rich client object proactively notifies the client of the obtained timeout status information so that the client locks the operation interface of the client according to timeout status information sent by the Flex rich client object. The specific implementation mechanism can refer to the description in steps 104 and 105.

According to the timeout control method 300 provided in this embodiment, a timeout control identifier is used to identify whether a timeout control is required for the request sent by the client so that the server can start the timeout control by using the timeout control identifier, which implements a more accurate timeout control. In addition, the client proactively obtains the timeout status information of the browser user from the server and locks the current operation interface of the browser user. Further, in this embodiment, a Flex rich client object is used to listen to the timeout status information of the browser user. Therefore, timeout determination information indicating that the browser user is not in the timeout state is not transmitted over the network, which saving network resources.

An embodiment of the present invention provides a timeout control method. The method includes:
receiving a client request from the client, where the client request includes a first timeout control identifier, and the first timeout control identifier is used for starting a timeout control of the browser user; and
determining, according to the first timeout control identifier, that the timeout control is required for the browser user, maintaining condition information required for determining whether the browser user times out, and generating timeout status information according to the condition information; where the timeout status information indicates whether the browser user times out so that the client locks the current operation interface of the browser user when the timeout status information indicates that the browser user times out. Further, the timeout control method further includes:
   responding to the client request according to the timeout status information of the browser user;

Further, the condition information includes a Cookie ID of the client and the last visit time corresponding to the Cookie ID.

The generating timeout status information according to the condition information includes: comparing the last visit time with the current time, and generating timeout status information corresponding to the Cookie ID when the difference between the current time and the last visit time is greater than a preset threshold.

Further, the timeout control method further includes:
receiving a timeout status query request from the client, where the timeout status query request includes a second timeout control identifier, and the second timeout control identifier indicates that no timeout control is required for the timeout status query request; determining a timeout status of the browser user according to the timeout status query request; and maintaining the timeout status information of the browser user; or
automatically and periodically determining a timeout status of the browser user, and maintaining the timeout status information of the browser user.

Further, the responding to the client request according to the timeout status information of the browser user includes: when the browser user does not time out, responding to the client request normally and refreshing the last visit time of the browser user; and if the browser user times out, determining a type of the client request and responding to the client request according to the type of the client request.

Further, the timeout control method further includes:
leading the client request to the login interface of the client if the client request is not a browser user re-authentication request.

Further, the responding to the client request according to the type of the client request includes:
verifying information about the browser user if the client request is a browser user re-authentication request; and
if the information about the browser user is correct, returning a browser user re-authentication success response, clearing the timeout status information of the browser user, and refreshing the last visit time in the Cookie ID of the browser user.

According to the timeout control methods provided in the embodiments of the present invention, a timeout control identifier is used to identify whether a timeout control is required for the request sent by the client so that the server can start the timeout control by using the timeout control identifier, which implements a more accurate timeout control. In addition, the server can proactively maintain the timeout status information of the client, and enable the client to lock the operation interface of the browser user when the client request times out by using the timeout status information. In this manner, the security of the browser user of the client is improved. The following describes the timeout control method provided in the embodiments of the present invention in detail with reference to the accompanying drawings.

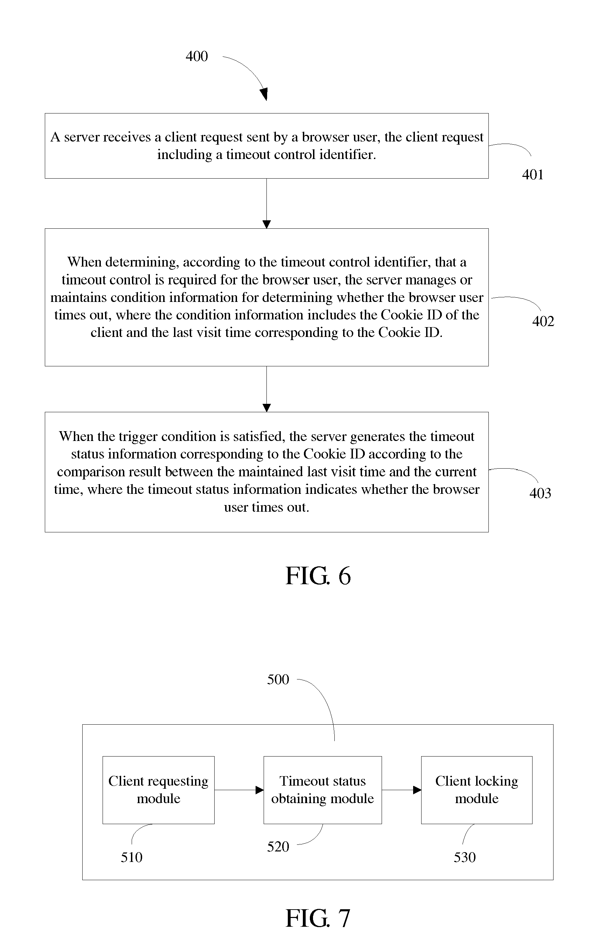

Referring to FIG. 6, a timeout control method 400 according to an embodiment of the present invention includes the following steps:

401. A server receives a client request sent by a browser user. The client request includes a timeout control identifier.

When the browser user sends the client request to the server, the client adds a timeout control identifier to the client request, indicating whether a timeout control is required for the client request. When responding to the client request, the server needs to identify the timeout control identifier in the client request, and determine, by using the control identifier, whether to start a timeout control to determine the timeout status of the browser user. The client request sent by the client includes multiple types of client requests, for example, a browser user re-authentication request sent after the client is locked, a service processing request, or an automatic client request triggered automatically by the client. These requests are not all triggered by the browser user by using the client. For example, the client request automatically triggered by the client generally is an automatic client request triggered periodically for obtaining alarm data and refreshing a monitoring status. If the periodically triggered automatic client request is not distinguished from a non-automatic client request triggered by the client, the server considers both the automatic client request and the non-automatic client request as the requests triggered by the browser user. In this manner, the automatic client request is sent continuously, and therefore the server cannot learn whether the browser user times out. Consequently, the timeout control mechanism does not work. In addition, the server determines, according to some client requests, that the browser user times out, but the server does not respond to a request from the client. Consequently, data that needs to be periodically updated or detected cannot be fed back. Therefore, according to this embodiment, the timeout control identifier indicating whether a timeout control is required for the client request is added to the sent client request, to distinguish types of the client requests sent by the client. In this manner, after the client sends a client request, the server obtains the timeout control identifier from the client request. Specifically, the timeout control identifier may be set in the message header or message body of the client request, for example, timeout-control:0, indicating that a timeout control is required for the client request; timeout-control:1, indicating that no timeout control is required for the client request.

402. When determining, according to the timeout control identifier, that a timeout control is required for the browser user, manage or maintain condition information required for determining whether the browser user times out. The condition information includes the Cookie ID of the client and the last visit time corresponding to the Cookie ID.

In this step, the determination of the client request according to the timeout control identifier may be reflected by the timeout control identifier directly. To be specific, when the timeout control identifier is 1, it is considered that a timeout control is required for the client request; when the timeout control identifier is 0, it is considered that no timeout control is required for the client request. In addition, the determination of the client request according to the timeout control identifier may be implemented by querying the corresponding timeout control table by using the timeout control identifier, and thereby determining whether the timeout control identifier indicates the timeout control is required for the client request or not. After obtaining the timeout control identifier in the client request, the server learns whether a timeout control is required for the client request. If a timeout control is required for the client request, the server starts the timeout control. If the client request is sent as a login request by the browser user by using the client, that is, the first client request from the browser user, the server obtains the Cookie ID of the client and saves the current visit time of the client by using the Cookie ID as a key value. If the client request is a non-automatic client request sent by the browser user after login, the server determines whether the browser user times out according to the difference between the last visit time of the browser user and the current time. To be specific, the server obtains the last visit time corresponding to the Cookie ID, calculates the difference between the current time and the last visit time and compares the difference with a preset threshold. If the difference is greater than the preset threshold, the browser user times out; if the difference is smaller than the preset threshold, the browser user does not time out. In addition, the server may also count the time from the last visit time of the browser user and determine whether the browser user times out according to the counted time. If the counted time is greater than the preset threshold, the browser user times out; if the counted time is smaller than the preset threshold, the browser user does not time out.

403. When the trigger condition is satisfied, the server generates the timeout status information corresponding to the Cookie ID according to a result of comparing the maintained last visit time and the current time. The timeout status information indicates whether the browser user times out.

After obtaining the timeout status of the browser user, the server may feed back the timeout status to the client. The feedback may be sent in response to a request from the client or may be pushed by the server to the client.

According to the timeout control method 400 provided in this embodiment, the first timeout control identifier in the client request is used to determine whether a timeout control is required for the client request sent by the client, and the server proactively maintains the timeout status information of the browser user so that the client can lock the operation interface of the browser user according to the maintained timeout status information of the browser user. In this manner, unauthorized access to the application system by copying a URL can be prevented.

Further, in step 402, the timeout status information of the browser user can be obtained and maintained by:
receiving a timeout status query request from the client, where the timeout status query request includes a second timeout control identifier, and the second timeout control identifier indicates that no timeout control is required for the timeout status query request; determining a timeout status of the browser user according to the timeout status query request; and maintaining the timeout status information of the browser user.

In this step, the server starts timeout determination by using the polling request sent by the client. Each time when the client sends a timeout status information query request, the server determines the status of the browser user by using the above method.

Further, in step 402, the determination of the timeout status of the client request may also be triggered by:
automatically and periodically determining a timeout status of the browser user, and maintaining the timeout status information of the browser user.

In this step, the server establishes a polling mechanism for the timeout status information of the browser user and periodically determines the timeout status of the browser user. Further, the timeout control method 400 according to an embodiment of the present invention further includes:
responding to the client request according to the timeout status information of the browser user; and
responding, by the server, to the client request according to the timeout status information of the browser user.

Further, the responding to the client request according to the timeout status information of the browser user includes:
when the browser user does not time out, responding to the client request normally and refreshing the last visit time of the browser user.

If determining that the browser user does not time out, the server responds to the client request, refreshes the last visit time corresponding to the Cookie ID of the client, that is, uses the visit time of the current client request as the last visit time of the browser user, and repeats the above steps.

Further, the responding to the client request according to the timeout status information of the browser user further includes:
determining the type of the client request when the browser user times out.

If the browser user times out before sending the client request, the client locks the operation interface. According to the general operation mode, in this case, the client can send a browser user re-authentication request which is the only one non-automatic client request. However, the browser user may send the client request by copying the URL on the same client (browser) to override the locked operation interface of the browser user. Therefore, in this case, the type of the client type needs to be determined.

Correspondingly, the timeout control method further includes: responding to the client request according to the type of the client request.

After obtaining the type of the client request after determination, the server can respond to the client request according to the type of the client request.

Further, the responding to the client request according to the type of the client request includes:
verifying information about the browser user if the client request is a browser user re-authentication request.

In this step, when determining that the current client request is a browser user re-authentication request, the server needs to verify the information about the browser user in the re-authentication request to determine whether the information about the browser user is correct. Based on the determination of the information about the browser user, the server determines how to respond to the browser user re-authentication request.

Correspondingly, the timeout control method further includes: responding to the client request according to whether the information about the browser user information is correct.

When determining that the client request is a browser user re-authentication request, the server verifies the information about the browser user in the browser user re-authentication request. The verification result determines how to respond to the client request.

Further, the responding to the client request according to the type of the client request further includes:
leading the client request to the login interface of the client if the client request is not a browser user re-authentication request.

In this case, the server determines that the client request is not sent by the locked client. Therefore, the server leads the client request to the login interface of the client.

Further, the responding to the client request according to whether the information about the browser user is correct includes:
if the information about the browser user is correct, returning a browser user re-authentication success response, clearing the timeout status information of the browser user, and refreshing the last visit time in the Cookie ID of the browser user.

If verifying that the entered user login information is correct, the server returns a re-authentication success response to the browser user attempting to log in. The client unlocks the operation interface according to the returned re-authentication success response and allows the browser user to attempt to log in to the client again. Meanwhile, the server clears the timeout status information of the browser user, refreshes the last visit time corresponding to the Cookie ID, and starts a new cycle of a timeout control.

Further, the responding to the client request according to whether the information about the browser user is correct further includes:
if the information about the browser user is correct, returning a browser user re-authentication failure response.

According to the timeout control method 400 provided in this embodiment, the server proactively maintains condition information required for determining whether the browser user times out, generates timeout status information of the browser user according to the condition information, and enables the client to lock the operation interface of the browser user when the client request times out. In addition, the timeout control identifier in the client request received by the server can be used to determine whether a timeout control is required for the client request sent by the client so that the server can determine the timeout status of the browser user more accurately.

Referring to FIG. 7, a client 500 according to an embodiment of the present invention includes:
a client requesting module 510, configured to send a client request to a server, where the client request includes a first timeout control identifier, the first timeout control identifier is used to start a timeout control of a browser user, and the server is configured to maintain condition information required for determining whether the browser user times out and generate timeout status information according to the condition information;
a timeout status obtaining module 520, configured to obtain the timeout status information of the browser user from the side of the server; and
a client locking module 530, configured to determine whether to lock the operation interface of the client according to the obtained timeout status information of the browser user.

Further, the timeout status obtaining module 520 is configured to send a polling request to the server and obtain the timeout status information of the browser user from the server by using the polling request, where the polling request includes a second timeout control identifier and the second timeout control identifier indicates that no timeout control is required for the polling request.

Further, the timeout status obtaining module 520 is configured to establish an HTTP long link with the server and obtain the timeout status information of the browser user by using the HTTP long link.

Further, the timeout status obtaining module 520 is configured to create a Flex rich client object, listen to, by using the Flex rich client object, the timeout status information of the browser user maintained by the server, and receive the timeout status information of the browser user sent by the server when the browser user times out.

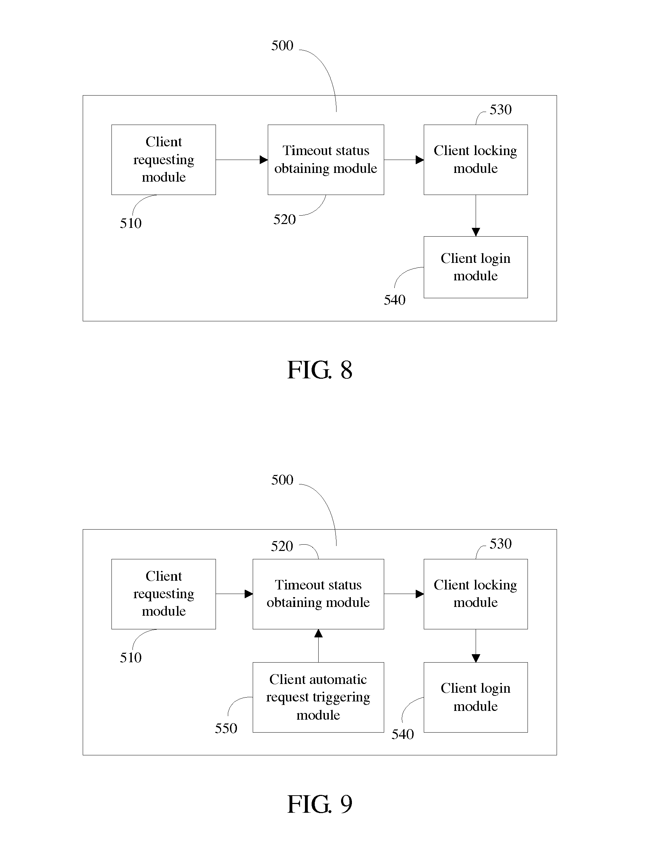

Further, the client locking module 530 is configured to prompt the browser user to re-enter user login information. Correspondingly, referring to FIG. 8, the client 500 further includes a client login module 540, configured to: respond to the entered user login information; send a login request to the server according to the user login information, where the login request includes the first timeout control identifier indicating that timeout control is required for the login request; and allow the browser user to log in to an application system after the login request is approved.

Referring to FIG. 9, the client 500 further includes:
a client request automatic triggering module 550, configured to automatically trigger the client request and obtain a response corresponding to the automatically triggered client request to refresh content in the operation interface, where the automatically triggered client request includes a second timeout control identifier and the second timeout control identifier indicates that no timeout control is required for the client request.

The server 500 according to this embodiment runs in the same mechanism as the timeout control methods 100, 200, and 300 according to the embodiments of the present invention, which is not detailed here.

According to the client 500 provided in this embodiment, the timeout control identifier is used to identify whether a timeout control is required for the request sent by the client so that the server can start the timeout control by using the timeout control identifier, which implements a more accurate timeout control. In addition, the client proactively obtains the timeout status information of the browser user from the server and locks the current operation interface of the browser use.

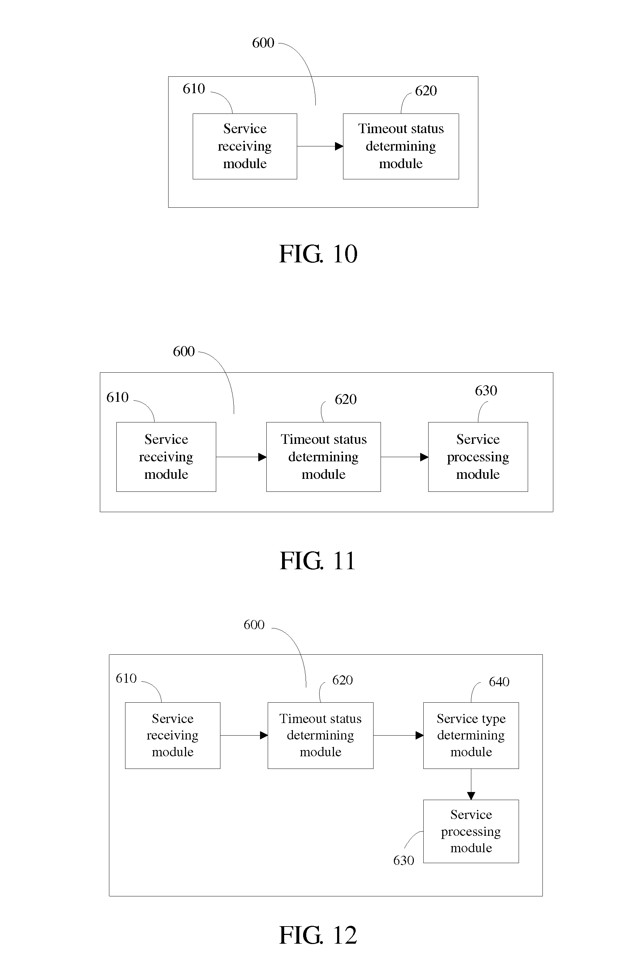

Referring to FIG. 10, a server 600 according to an embodiment of the present invention includes:
a service receiving module 610, configured to receive a client request from the client, where the client request includes a first timeout control identifier, and the first timeout control identifier is used for starting a timeout control of a browser user; and
a timeout status determining module 620, configured to: determine, according to the first timeout control identifier, that the timeout control is required for the browser user; maintain condition information required for determining whether the browser user times out; and generate timeout status information according to the condition information, where the timeout status information indicates whether the browser user times out so that the client locks the current operation interface of the browser user when the timeout status information indicates that the browser user times out.

The server 600 according to this embodiment runs in the same mechanism as the timeout control method 400 according to an embodiment of the present invention, which is not detailed here.

According to the server 600, the server identifies, by using a timeout control identifier, whether a timeout control is required for the request sent by the client so that the server can start the timeout control by using the timeout control identifier, which implements a more accurate timeout control. In addition, the server can proactively maintain the timeout status information of the client, and enable the client to lock the operation interface of the browser user when the client request times out by using the timeout status information. In this manner, the security of the browser user of the client is improved.

Further, the condition information includes the Cookie ID of the client and the last visit time corresponding to the Cookie ID.

Correspondingly, the timeout status determining module 620 of the server 600 according to this embodiment is configured to compare the last visit time with the current time, and generate the timeout status information corresponding to the Cookie ID when the difference between the current time and the last visit time is greater than a preset threshold.

The timeout status determining module 620 of the server 600 provided in this embodiment is further configured to: receive a timeout status query request from the client, where the timeout status query request includes a second timeout control identifier, and the second timeout control identifier indicates that no timeout control is required for the timeout status query request; determine that the browser user times out according to the timeout status query request; and maintain the timeout status information of the browser user.

The timeout status determining module 620 of the server 600 provided in this embodiment is further configured to automatically and periodically determine that the browser user times out, and maintain the timeout status information of the browser user.

Referring to FIG. 11, the server further includes a service processing module 630, configured to respond to the client request according to the timeout status information of the browser user.

The service processing module 630 is further configured to: when the browser user does not time out, respond to the client request normally and refreshing the last visit time of the browser user; and if the browser user times out, determine the type of the client request and respond to the client request according to the type of the client request. Correspondingly, referring to FIG. 12, the server 600 further includes a service type determining module 640, configured to determine the type of the client request when the browser user times out. Correspondingly, the service processing module 630 is further configured to lead the client request to the login interface of the client when the client request is not a browser user re-authentication request.

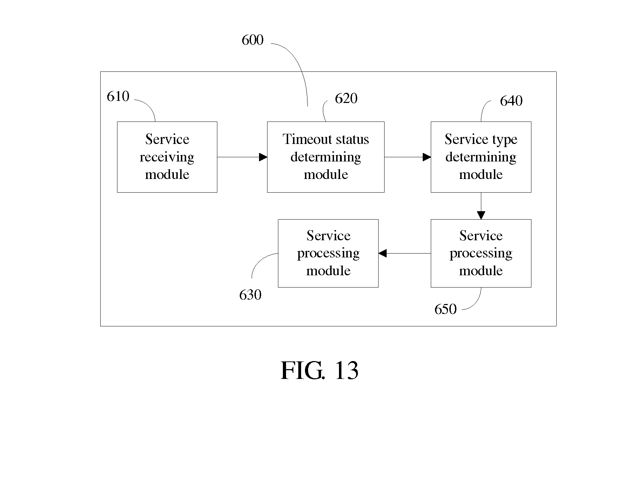

Referring to FIG. 13, the server 600 according to this embodiment further includes a user information verifying module 650, configured to verify information about the browser user. Correspondingly, the service processing module 630 is further configured to respond to the client request according to whether the information about the browser user is correct.

The service processing module 630 is further configured to: if the information about the browser user is correct, return a browser user re-authentication success response, clear the timeout status information of the browser user, and refresh the last visit time in the Cookie ID of the browser user.

An embodiment of the present invention provides a timeout control system, which is applied to a network system 700 illustrated in FIG. 16.

The network system 700 includes a client 710, a server 720, and a connection network 730 for connecting the client 710 and the server 720. The data exchange between the client 710 and the server 720 is implemented through the connection network 710.

Referring to FIG. 17, the timeout control system 800 includes the client 710 and the server 720.

The client 710 is configured to:
send a client request to a server, where the client request includes a first timeout control identifier, the first timeout control identifier is used for starting a timeout control of the browser user, and the server is configured to maintain condition information required for determining whether the browser user times out and generate timeout status information according to the condition information; obtain the timeout status information of the browser user from the side of the server; and lock the current operation interface of the browser user when determining, according to the timeout status information, that the browser user times out; and

The server 720 is configured to receive a client request from the client, where the client request includes a first timeout control identifier, and the first timeout control identifier is used for starting a timeout control of a browser user; determine, according to the first timeout control identifier, that the timeout control is required for the browser user; maintain condition information required for determining whether the browser user times out; and generate timeout status information according to the condition information; where the timeout status information indicating whether the timeout status information indicates that the browser user times out so that the client locks the current operation interface of the browser user when the browser user times out.

According to the above description of the embodiments, those skilled in the art can easily understand that the embodiments of the present invention can be implemented by using software in combination with necessary hardware. It should be noted that the present invention may also be implemented by using the hardware. However, in most cases, implementation using software in combination with necessary hardware is exemplary. Based on such understandings, the technical solutions or part of the technical solutions disclosed in the present invention that make contributions to the prior art may be essentially embodied in the form of a software product. The software product may be stored in a storage medium such as read only memory (ROM), random access memory (RAM), magnetic disk, or compact disc-read only memory (CD-ROM). The software product includes a number of instructions that enable a computer (PC, server, or network device) device to execute the methods provided in the embodiments of the present invention.

## Claims

1. A timeout control method of controlling timeout of a client, the client comprising at least one browser user, wherein the method comprises:
sending, by the client, a client request to a server, wherein the client request comprises a first timeout control identifier, the first timeout control identifier is used for starting a timeout control of the browser user, and the server is configured to maintain condition information required for determining whether the browser user times out, and generate timeout status information according to the condition information;
obtaining the timeout status information of the browser user from the side of the server; and
locking a current operation interface of the browser user when determining, according to the timeout status information, that the browser user times out.

2. The method according to claim 1, wherein after the locking the current operation interface of the browser user, the method further comprises:
prompting the browser user to re-enter user login information;
responding to the login information; sending a login request to the server according to the user login information, wherein the login request comprises the first timeout control identifier indicating that timeout control is required for the login request; and allowing the browser user to log in to an application system after the login request is approved.

3. The method according to claim 1 or 2, further comprising:
automatically triggering a client request and obtaining a response corresponding to the automatically triggered client request to refresh content in the operation interface, wherein the automatically triggered client request comprises a second timeout control identifier and the second timeout control identifier indicates that no timeout control is required for the client request.

4. The method according to claim 1 or 2, wherein the obtaining the timeout status information of the browser user from the side of the server comprises:
sending a polling request to the server and obtaining the timeout status information of the browser user from the server by using the polling request, wherein the polling request comprises a second timeout control identifier and the second timeout control identifier indicates that no timeout control is required for the polling request.

5. The method according to claim 1 or 2, wherein the obtaining the timeout status information of the browser user from the side of the server comprises:
establishing an HTTP long link with the server and obtaining the timeout status information of the browser user by using the HTTP long link.

6. The method according to claim 1 or 2, wherein the obtaining the timeout status information of the browser user from the side of the server comprises:
creating a Flex rich client object, listening to, by using the Flex rich client object, the timeout status information of the browser user maintained by the server, and receiving the timeout status information of the browser user sent by the server when the browser user times out.

7. The method according to claim 1, wherein the first timeout control identifier is comprised in a message body or message header of the request.

8. A timeout control method of controlling timeout of a client, the client comprising at least one browser user, wherein the method comprises:
receiving a client request from the client, where the client request comprises a first timeout control identifier, and the first timeout control identifier is used for starting a timeout control of the browser user; and
determining, according to the first timeout control identifier, that the timeout control is required for the browser user, maintaining condition information required for determining whether the browser user times out, and generating timeout status information according to the condition information; wherein the timeout status information indicates whether the browser user times out, so that the client locks a current operation interface of the browser user when the timeout status information indicates that browser user times out.

9. The method according to claim 8, further comprising: responding to the client request according to the timeout status information of the browser user.

10. The method according to claim 8 or 9, wherein the condition information comprises a Cookie ID of the client and the last visit time corresponding to the Cookie ID; and
the generating timeout status information according to the condition information comprises:
comparing the last visit time with current time, and generating timeout status information corresponding to the Cookie ID when a difference between the current time and the last visit time is greater than a preset threshold.

11. The method according to claim 8, further comprising:
receiving a timeout status query request from the client, wherein the timeout status query request comprises a second timeout control identifier, and the second timeout control identifier indicates that no timeout control is required for the timeout status query request; determining a timeout status of the browser user according to the timeout status query request; and maintaining the timeout status information of the browser user; or
automatically and periodically determining a timeout status of the browser user, and maintaining the timeout status information of the browser user.

12. The method according to claim 9, wherein the responding to the client request according to the timeout status information of the browser user comprises:
when the browser user does not time out, responding to the client request normally and refreshing the last visit time of the browser user; and
if the browser user times out, determining a type of the client request and responding to the client request according to the type of the client request.

13. The method according to claim 12, wherein the responding to the client request according to the type of the client request comprises:
leading the client request to a login interface of the client if the client request is not a browser user re-authentication request.

14. The method according to claim 12, wherein the responding to the client request according to the type of the client request comprises:
verifying information about the browser user if the client request is a browser user re-authentication request; and
if the information about the browser user is correct, returning a browser user re-authentication success response, clearing the timeout status information of the browser user, and refreshing the last visit time in the Cookie ID of the browser user.

15. A client, comprising:
a client requesting module, configured to send a client request to a server, wherein the client request comprises a first timeout control identifier, the first timeout control identifier is used to start a timeout control of a browser user, and the server is configured to maintain condition information required for determining whether the browser user times out and generate timeout status information according to the condition information;
a timeout status obtaining module, configured to obtain the timeout status information of the browser user from the side of the server; and
a client locking module, configured to determine whether to lock the operation interface of the client according to the obtained timeout status information of the browser user, and lock a current operation interface if the browser user times out.

16. The client according to claim 15, wherein
the client locking module is further configured to prompt the browser user to re-enter user login information;
and correspondingly the client further comprises:
a client login module, configured to respond to the entered user login information; send a login request according to the user login information, wherein the login request comprises the timeout control identifier indicating that timeout control is required for the login request; and allow the browser user to log in to an application system after the login request is approved

17. The client according to claim 15 or 16, further comprising:
a client request automatic triggering module, configured to automatically trigger the client request and obtain a response corresponding to the automatically triggered client request to refresh content in the operation interface, wherein the automatically triggered client request comprises a second timeout control identifier and the second timeout control identifier indicates that no timeout control is required for the client request.

18. The client according to claim 15 or 16, wherein the timeout status obtaining module is further configured to send a polling request to the server and obtain the timeout status information of the browser user from the server by using the polling request, wherein the polling request comprises a second timeout control identifier and the second timeout control identifier indicates that no timeout control is required for the polling request.

19. The client according to claim 15 or 16, wherein the timeout status obtaining module is further configured to establish an HTTP long link with the server and obtain the timeout status information of the browser user by using the HTTP long link.

20. The client according to claim 15 or 16, wherein the timeout status obtaining module is further configured to create a Flex rich client object, listen to, by using the Flex rich client object, the timeout status information of the browser user maintained by the server, and receive the timeout status information of the browser user sent by the server when the browser user times out.

21. A server, comprising:
a service receiving module, configured to receive a client request from the client, wherein the client request comprises a first timeout control identifier, and the first timeout control identifier is used for starting a timeout control of a browser user; and
a timeout status determining module, configured to: determine, according to the first timeout control identifier, that the timeout control is required for the browser user; maintain condition information required for determining whether the browser user times out; and generate timeout status information according to the condition information, wherein the timeout status information indicates whether the browser user times out so that the client locks the current operation interface of the browser user when the timeout status information indicates that the browser user times out.

22. The server according to claim 21, further comprising: a service processing module, configured to respond to the client request according to the timeout status information of the browser user.

23. The server according to claim 21 or 22, wherein the timeout status determining module, the condition information comprises a Cookie ID of the client and the last visit time corresponding to the Cookie ID; and correspondingly, the timeout status determining unit is configured to compare the last visit time with current time, and generate the timeout status information corresponding to the Cookie ID when a difference between the current time and the last visit time is greater than a preset threshold.

24. The server according to claim 21, wherein
the timeout status determining module is further configured to: receive a timeout status query request from the client, wherein the timeout status query request comprises a second timeout control identifier, and the second timeout control identifier indicates that no timeout control is required for the timeout status query request; determine a timeout status of the browser user according to the timeout status query request; and maintain the timeout status information of the browser user; or
the timeout status determining module is further configured to automatically and periodically determine a timeout status of the browser user, and maintain the timeout status information of the browser user.

25. The server according to claim 22, wherein
the service processing module is configured to: when the browser user does not time out, respond to the client request normally and refreshing the last visit time of the browser user; and when the browser user times out, determine a type of the client request and respond to the client request according to the type of the client request.

26. The server according to claim 25, further comprising:
a service type determining module, configured to determine the type of the client request when the browser user times out;
wherein the service processing module is further configured to lead the client request to the login interface of the client if the client request is not a browser user re-authentication request.

27. The server according to claim 26, further comprising:
a user information verifying module, configured to verify information about the browser user when the client request is a browser user re-authentication request;
wherein the service processing module is further configured to: respond to the client request according to whether the information about the browser user is correct; if the information about the browser user is correct, return a browser user re-authentication success response, clear the timeout status information of the browser user, and refresh the last visit time in the Cookie ID of the browser user.

28. A timeout processing system, comprising:
a client, configured to:
send a client request to a server, the client request comprising a first timeout control identifier, wherein the first timeout control identifier is used for starting a timeout control of the browser user, and the server is configured to maintain condition information required for determining whether the browser user times out and generate timeout status information according to the condition information;
obtain the timeout status information of the browser user from the side of the server; and lock the current operation interface of the browser user when determining, according to the timeout status information, that the browser user times out; and
a server, configured to:
receive a client request from the client, the client request comprising a first timeout control identifier, wherein the first timeout control identifier is used for starting a timeout control of a browser user;
determine, according to the first timeout control identifier, that the timeout control is required for the browser user;
maintain condition information required for determining whether the browser user times out; and
generate timeout status information according to the condition information; wherein the timeout status information indicates whether the browser user times out so that the client locks a current operation interface of the browser user when the timeout status information indicates that the browser user times out.
